# EUROPÄISCHE PATENTANMELDUNG

(11) **EP 3 878 662 A1**
(43) Veröffentlichungstag der Anmeldung: **15.09.2021**
(21) Anmeldenummer: 21161816.0
(22) Anmeldetag: 10.03.2021
(51) Int. Cl.: B60B 17/00

(54) **RAD FÜR FAHRZEUGE**

(30) Priorität: 12.03.2020 AT 502122020
(71) Anmelder: Siemens Mobility Austria GmbH, 1210 Wien (AT)
(72) Erfinder: Prix, Alexander, 8010 Graz (AT); Boronkai, Laszlo, 8101 Gratkorn (AT); Rossegger, Engelbert, 8605 Kapfenberg (AT)
(74) Vertreter: Deffner, Rolf

(57) **Zusammenfassung**

Die Erfindung bezieht sich auf ein Rad für Fahrzeuge, insbesondere für Fahrwerke von Schienenfahrzeugen, mit einem Radkörper (1) und einer Lauffläche (9).
Um vorteilhafte Konstruktionsbedingungen zu schaffen, wird vorgeschlagen, dass zumindest eine erste Schutzschale (10) mit dem Radkörper (1) verbunden ist, wobei die zumindest erste Schutzschale (10) mittels Schrauben, welche in Bohrungen des Radkörpers (1) und der zumindest ersten Schutzschale (10) gelagert sind, mit dem Radkörper (1) verbunden ist, wobei mit den Schrauben Schutzbeilagen verbunden sind, welche Ausnehmungen aufweisen, in welchen Schraubenköpfe der Schrauben vorgesehen sind.

Dadurch wird ein vorteilhafter Schutz des Rads gegen Schäden durch aufprallende Objekte, z.B. durch Steinschläge, bewirkt.

## Beschreibung

Die Erfindung betrifft ein Rad für Fahrzeuge, insbesondere für Fahrwerke von Schienenfahrzeugen, mit einem Radkörper und einer Lauffläche.

Räder von Fahrzeugen, z.B. Schienenfahrzeugräder, sind insbesondere im Hochgeschwindigkeitsbetrieb häufig einem Aufprall von kleineren Objekten (z.B. von Steinen oder Schotter etc.) ausgesetzt, wodurch Schäden an den Rädern verursacht und Betriebseinschränkungen oder korrektive Wartungsmaßnahmen an den Fahrzeugen erforderlich werden können. Beispielsweise kann es dadurch erforderlich werden, ein Rad oder einen kompletten Radsatz vor Ablauf seiner geplanten Standzeit zu tauschen.

Aus dem Stand der Technik ist beispielsweise die Radsatzwellenschutzanordnung Siemens Steel Rubber Axle Protection (SISRAP) bekannt. SISRAP schützt eine Radsatzwelle eines Schienenfahrzeugs z.B. vor Steinschlägen und umfasst eine tieftemperaturtaugliche Elastomermatte, Halbschalen aus nichtrostendem Stahlblech sowie Befestigungsbänder aus einem nichtrostenden Material.
Die Elastomermatte weist eine Dicke von 3mm auf und ummantelt eine Radsatzwelle, auf der eine Korrosionsschutzbeschichtung vorgesehen ist. Die Elastomermatte ist wiederum von zwei halbzylindrischen Halbschalen mit Dicken von je 2mm ummantelt. Querschnitte der beiden Halbschalen weisen gleiche Radien auf.
Die Radsatzwellenschutzanordnung SISRAP ist in der DE 10 2010 009 437 A1 offenbart.

Weiterhin zeigt die WO 2018/166949 A1 eine ballistische Schutzanordnung für Fahrzeuge, bei welcher eine Radsatzwelle eines Fahrwerks eines Schienenfahrzeugs mittels einer Schale ummantelt ist. Die Schale weist mindestens eine Materialschicht aus mindestens einem Faserwerkstoff auf.

Die genannten Ansätze weisen in ihren bekannten Formen den Nachteil auf, dass die offenbarten Schutzanordnungen ausschließlich Radsatzwellen vor aufprallenden Objekten schützen.

Der Erfindung liegt die Aufgabe zugrunde, ein gegenüber dem Stand der Technik weiterentwickeltes, vor aufprallenden Objekten geschütztes Rad anzugeben.

Erfindungsgemäß wird diese Aufgabe gelöst mit einem Rad der eingangs genannten Art, bei dem zumindest eine erste Schutzschale mit dem Radkörper verbunden ist, wobei die zumindest erste Schutzschale mittels Schrauben, welche in Bohrungen des Radkörpers und der zumindest ersten Schutzschale gelagert sind, mit dem Radkörper verbunden ist, wobei mit den Schrauben Schutzbeilagen verbunden sind, welche Ausnehmungen aufweisen, in welchen Schraubenköpfe der Schrauben vorgesehen sind.
Durch diese Maßnahme können Objekte wie Steine oder Schotter etc. nicht unmittelbar auf gefährdete Bereiche des Radkörpers, wie z.B. auf einen Radsteg, aufprallen, sondern werden von der ersten Schutzschale abgefangen.
Dadurch werden Schäden an dem Rad vermieden und Risiken in Bezug auf einen vorzeitigen Räder- oder Radsatztausch gesenkt.
Das Rad kann einseitig (z.B. zu einer Außenseite des Fahrzeugs hin) oder beidseitig geschützt sein. Bei einem einseitigen Schutz ist auf einer ersten Stirnseite des Radkörpers die erste Schutzschale vorgesehen, auf einer zweiten Stirnseite des Radkörpers ist jedoch keine Schutzschale angeordnet.
Bei einem beidseitigen Schutz ist auf der ersten Stirnseite des Radkörpers die erste Schutzschale, auf der zweiten Stirnseite des Radkörpers eine zweite Schutzschale vorgesehen.
Darüber hinaus ist die erste Schutzschale einerseits aufgrund der Schrauben sicher mit dem Radkörper verbunden und andererseits sind, aufgrund der Ausnehmungen der Schutzbeilagen, in welchen die Schraubenköpfe der Schrauben vorgesehen sind, auch die Schrauben vor aufprallenden Objekten geschützt.

Es ist günstig, wenn die zumindest erste Schutzschale lösbar mit dem Radkörper verbunden ist.
Durch diese Maßnahme ist die erste Schutzschale tauschbar, wenn diese beispielsweise aufgrund von aufprallenden Objekten beschädigt wird.

Eine bevorzugte Lösung wird erreicht, wenn die zumindest erste Schutzschale entlang eines Radstegs verlaufend angeordnet ist.
In diesem Zusammenhang ist es auch hilfreich, wenn die zumindest erste Schutzschale sich bis zu einer Mittenbohrung einer Radnabe erstreckend angeordnet ist.
Ferner ist es günstig, wenn die zumindest erste Schutzschale sich bis zu einer ersten Stirnfläche eines Radkranzes erstreckend angeordnet ist.
Dadurch wird ein großer Teil des Radkörpers von der ersten Schutzschale abgedeckt.

Um auch ein Rad mit Radscheibenbremse vor aufprallenden Objekten zu schützen, ist es weiterhin vorteilhaft, wenn mit dem Radkörper eine Radbremsscheibe verbunden ist, wobei die zumindest erste Schutzschale eine radiale Erstreckung von kleiner oder gleich einem Innenradius der Radbremsscheibe aufweist.

Es ist jedoch auch günstig, wenn mit dem Radkörper eine Radbremsscheibe verbunden ist, wobei die zumindest erste Schutzschale zwischen dem Radkörper und einem ersten Reibring der Radbremsscheibe eingespannt ist.
Durch diese Maßnahme können Befestigungsmittel der Radbremsscheibe und der erste Reibring selbst zur Verbindung der ersten Schutzschale mit dem Radkörper eingesetzt werden.

Eine günstige Ausgestaltung erhält man weiterhin, wenn die zumindest erste Schutzschale an den Radkörper anliegend angeordnet ist.
In diesem Zusammenhang ist es auch günstig, wenn die zumindest erste Schutzschale einem Konturverlauf des Radkörpers folgend ausgebildet ist.
Durch diese Maßnahme wird ein besonders kompaktes Rad mit Schutzanordnung erzielt. Ein Eindringen von Fremdkörpern in einen Bereich zwischen dem Radkörper und der ersten Schutzschale wird vermieden. Weiterhin ist ein Anliegen der ersten Schutzschale an den Radkörper auch aerodynamisch und akustisch günstig.

Aus Gründen einer einfachen Wartung und Instandhaltung ist es hilfreich, wenn die zumindest erste Schutzschale aus einzelnen Schutzschalenelementen ausgebildet ist.
Dadurch kann bei Beschädigung eines Schutzschalenelements dieses sehr rasch getauscht werden. Insbesondere dann, wenn das Rad Teil eines Radsatzes mit Radsatzlagern, Radsatzlagergehäusen etc. ist, können die einzelnen Schutzschalenelemente ohne Ausbau von Radsatzkomponenten demontiert und montiert werden.
Weiterhin braucht bei einer Mehrzahl an Schutzschalenelementen nur jenes von einem Schaden betroffene, im Verhältnis zu einer Gesamtfläche der ersten Schutzschale relativ kleine Schutzschalenelement getauscht werden, während unbeschädigte Schutzschalenelemente auf dem Radkörper montiert bleiben können.

Eine vorteilhafte Ausgestaltung erhält man, wenn die zumindest erste Schutzschale ein äußeres erstes Schalenteil aus Metall und ein inneres zweites Schalenteil aus Elastomer aufweist, wobei das zweite Schalenteil dem Radkörper zugewandt angeordnet ist.
Dadurch wird eine Funktionsaufteilung erreicht. Während das erste Schalenteil als robuste Abdeckung gegen auf die erste Schutzschale aufprallende Objekte fungiert, federt und dämpft das zweite Schalenteil, welches eine hohe Energieabsorptionsfähigkeit aufweist, Schläge gegen die erste Schutzschale.

Ein umfassender Schutz gegen Steinschläge, Schotterflug etc. wird mit einem Radsatz eines Fahrzeugs mit zwei je zumindest eine Schutzschale aufweisenden Rädern erreicht, wobei eine Radsatzwelle einen Radsatzwellenschutzmantel aufweist.

Dabei ist es günstig, wenn Schutzschalen der Räder den Radsatzwellenschutzmantel überlappend angeordnet sind. Dadurch wird ein Korrosionsschutz in Übergangsbereichen zwischen der Radsatzwelle und den Rädern bewirkt.

Nachfolgend wird die Erfindung anhand von Ausführungsbeispielen näher erläutert.

Es zeigen beispielhaft:
- Fig. 1:: Einen Seitenriss einer beispielhaften ersten Ausführungsvariante eines erfindungsgemäßen Rads in geschnittener Darstellung mit einer ersten Schutzschale und einer zweiten Schutzschale,
- Fig. 2:: Einen Seitenriss einer beispielhaften zweiten Ausführungsvariante eines erfindungsgemäßen Rads in geschnittener Darstellung mit einer Radbremsscheibe sowie einer ersten Schutzschale und einer zweiten Schutzschale, welche sich bis zu der Radbremsscheibe erstrecken,
- Fig. 3:: Einen Seitenriss einer beispielhaften dritten Ausführungsvariante eines erfindungsgemäßen Rads in geschnittener Darstellung mit einer Radbremsscheibe sowie einer ersten Schutzschale und einer zweiten Schutzschale, welche zwischen einem Radkörper und der Radbremsscheibe eingespannt sind,
- Fig. 4:: Einen Grundriss einer beispielhaften vierten Ausführungsvariante eines erfindungsgemäßen Rads mit einer ersten Schutzschale, welche einzelne Schutzschalenelemente aufweist, und
- Fig. 5:: Einen Seitenriss einer beispielhaften Ausführungsvariante eines Radsatzes in geschnittener Darstellung mit einem erfindungsgemäßen ersten Rad, einem erfindungsgemäßen zweiten Rad und einer Radsatzwelle mit einem Radsatzwellenschutzmantel.

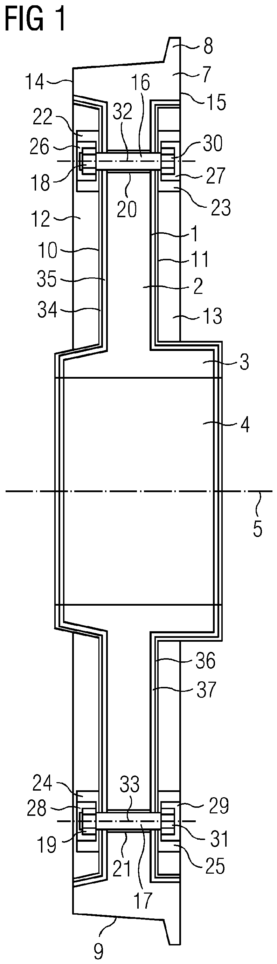

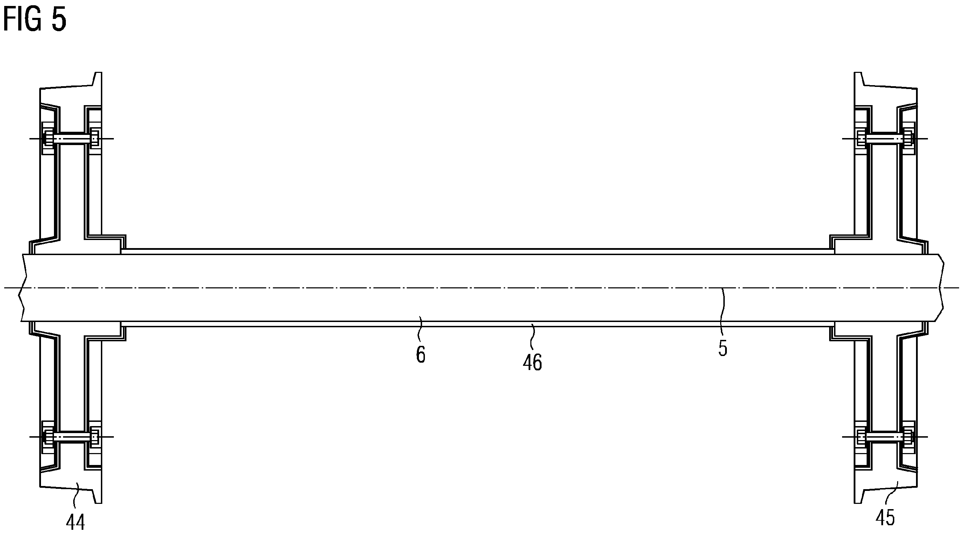

Fig. 1 zeigt einen Seitenriss einer beispielhaften ersten Ausführungsvariante eines erfindungsgemäßen Rads für ein Fahrwerk eines Schienenfahrzeugs in geschnittener Darstellung.
Das Rad weist eine einen Radkörper 1 mit einem Radsteg 2 und einer Radnabe 3 auf. Die Radnabe 3 weist wiederum eine Mittenbohrung 4 mit einer Radachse 5 auf. Über die Mittenbohrung 4 ist eine beispielhaft in Fig. 5 dargestellte Radsatzwelle 6 mit dem Rad verbindbar.
Der Radkörper 1 umfasst weiterhin einen Radkranz 7 mit einem Spurkranz 8. An dem Rad ist weiterhin umfangsseitig eine Lauffläche 9 vorgesehen, über welche das Rad auf einer in Fig. 1 nicht gezeigten Schiene abrollen kann.

Das Rad weist eine erste Schutzschale 10 und eine zweite Schutzschale 11 auf, welche mit dem Radkörper 1 verschraubt und somit lösbar verbunden sind. Die erste Schutzschale 10 ist auf einer ersten Stirnseite 12 des Radkörpers 1 vorgesehen, die zweite Schutzschale 11 auf einer zweiten Stirnseite 13 des Radkörpers 1.
Die erste Schutzschale 10 und die zweite Schutzschale 11 sind entlang des Radstegs 2 verlaufend sowie sich einerseits bis zu der Mittenbohrung 4 der Radnabe 3 und andererseits bis zu Stirnflächen des Radkranzes 7 erstreckend angeordnet.
Die erste Schutzschale 10 ist dabei sich bis zu einer ersten Stirnfläche 14 des Radkranzes 7 erstreckend vorgesehen, die zweite Schutzschale 11 sich bis zu einer zweiten Stirnfläche 15 des Radkranzes 7 erstreckend.
Die erste Schutzschale 10 und die zweite Schutzschale 11 sind an den Radkörper 1 anliegend angeordnet und Konturverläufen des Radkörpers 1 folgend ausgebildet.
Erfindungsgemäß ist es jedoch auch denkbar, dass die erste Schutzschale 10 und die zweite Schutzschale 11 von dem Radkörper 1 beabstandet angeordnet sind (beispielsweise mittels Distanzstücken oder mittels Schrauben-Distanzscheiben zwischen der ersten Schutzschale 10 und der zweiten Schutzschale 11 einerseits und dem Radkörper 1 andererseits).

Das Rad gemäß Fig. 1 ist vereinfachend kantig dargestellt. Erfindungsgemäß ist es jedoch selbstverständlich möglich und üblicherweise vorgesehen, dass das Rad gerundete Konturen mit unterschiedlichen Radien aufweist (z.B. an Übergängen zwischen der Radnabe 3 und dem Radsteg 2, zwischen dem Radsteg 2 und dem Radkranz 7 etc.). Die erste Schutzschale 10 und die zweite Schutzschale 11 sind dabei diesen gerundeten Konturen folgend und an den Radkörper 1 anliegend angeordnet.

Die erste Schutzschale 10 und die zweite Schutzschale 11 sind im Grundriss kreisringförmig ausgebildet.
Die erste Schutzschale 10 und die zweite Schutzschale 11 sind mittels Durchgangsschrauben, welche durch Bohrungen in dem Radkörper 1 sowie in der ersten Schutzschale 10 und in der zweiten Schutzschale 11 hindurchgeführt sind, und Schraubenmuttern mit dem Radkörper 1 verspannt.
Von diesen Durchgangsschrauben und Schraubenmuttern sind in Fig. 1 eine erste Durchgangsschraube 16, welche mit einer ersten Schraubenmutter 18 verbunden ist, sowie eine zweite Durchgangsschraube 17, welche mit einer zweiten Schraubenmutter 19 verbunden ist, sichtbar. Die erste Durchgangsschraube 16 ist durch eine erste Bohrung 20 in dem Radkörper 1, die zweite Durchgangsschraube 17 durch eine zweite Bohrung 21 in dem Radkörper 1 hindurchgeführt.
Die erste Bohrung 20 und die zweite Bohrung 21 sind deckungsgleich mit Bohrungen in der ersten Schutzschale 10 und in der zweiten Schutzschale 11 angeordnet. Erfindungsgemäß ist es jedoch auch vorstellbar, die erste Schutzschale 10 und die zweite Schutzschale 11 über geeignete Klemmmittel beispielsweise mit der Radnabe 3 zu verklemmen.

Mit der ersten Durchgangsschraube 16 ist im Bereich der ersten Stirnseite 12 des Radkörpers 1 eine zylindrische erste Schutzbeilage 22 verbunden, im Bereich der zweiten Stirnseite 13 eine zylindrische zweite Schutzbeilage 23. Die erste Schutzbeilage 22 und die zweite Schutzbeilage 23 sind in einem Elastomer ausgeführt.
Die erste Schutzbeilage 22 weist eine zylindrische erste Ausnehmung 26 auf, in welcher die erste Schraubenmutter 18 vorgesehen ist. Die zweite Schutzbeilage 23 umfasst eine zylindrische zweite Ausnehmung 27, in welcher ein erster Schraubenkopf 30 der ersten Durchgangsschraube 16 angeordnet ist.
Mit der zweiten Durchgangsschraube 17 ist im Bereich der ersten Stirnseite 12 des Radkörpers 1 eine zylindrische dritte Schutzbeilage 24 verbunden, im Bereich der zweiten Stirnseite 13 eine zylindrische vierte Schutzbeilage 25. Die dritte Schutzbeilage 24 und die vierte Schutzbeilage 25 sind in einem Elastomer ausgebildet.
Die dritte Schutzbeilage 24 weist eine zylindrische dritte Ausnehmung 28 auf, in welcher die zweite Schraubenmutter 19 vorgesehen ist. Die vierte Schutzbeilage 25 umfasst eine zylindrische vierte Ausnehmung 29, in welcher ein zweiter Schraubenkopf 31 der zweiten Durchgangsschraube 17 angeordnet ist.

Die erste Durchgangsschraube 16, die erste Schraubenmutter 18, die erste Bohrung 20 und die erste Schutzbeilage 22 weisen in jenem in Fig. 1 dargestellten Montagezustand eine gemeinsame erste Längsachse 32 auf; die zweite Durchgangsschraube 17, die zweite Schraubenmutter 19, die zweite Bohrung 21 und die zweite Schutzbeilage 23 eine gemeinsame zweite Längsachse 33.
Die erste Längsachse 32 und die zweite Längsachse 33 sind parallel zu der Radachse 5 ausgerichtet.
Die erste Schutzbeilage 22 und die zweite Schutzbeilage 23 weisen im Bereich ihrer Grundflächen Bohrungen auf, durch welche die erste Durchgangsschraube 16 hindurchgeführt ist. Die erste Schraubenmutter 18 und der erste Schraubenkopf 30 liegen im Bereich der Grundflächen der ersten Schutzbeilage 22 und der zweiten Schutzbeilage 23 an der ersten Schutzbeilage 22 bzw. an der zweiten Schutzbeilage 23 an.

Die dritte Schutzbeilage 24 und die vierte Schutzbeilage 25 weisen im Bereich ihrer Grundflächen Bohrungen auf, durch welche die zweite Durchgangsschraube 17 hindurchgeführt ist. Die zweite Schraubenmutter 19 und der zweite Schraubenkopf 31 liegen im Bereich der Grundflächen der dritten Schutzbeilage 24 und der vierten Schutzbeilage 25 an der dritten Schutzbeilage 24 bzw. an der vierten Schutzbeilage 25 an. Die erste Schutzbeilage 22 und die dritte Schutzbeilage 24 liegen an der ersten Schutzschale 10 an, die zweite Schutzbeilage 23 und die vierte Schutzbeilage 25 an der zweiten Schutzschale 11.

Die erste Schutzschale 10 weist ein äußeres erstes Schalenteil 34 aus Verbundblech, d.h. aus Metall, und ein inneres zweites Schalenteil 35 aus einem biegsamen Elastomer auf, wobei das zweite Schalenteil 35 dem Radkörper 1 zugewandt angeordnet ist.
Die zweite Schutzschale 11 weist ein äußeres drittes Schalenteil 36 aus Verbundblech und ein inneres viertes Schalenteil 37 aus einem biegsamen Elastomer auf, wobei das vierte Schalenteil 37 dem Radkörper 1 zugewandt angeordnet ist.
Erfindungsgemäß ist es jedoch auch denkbar, dass die erste Schutzschale 10 und die zweite Schutzschale 11 aus faserverstärktem Kunststoff mit einer Matrix aus organischem Material sowie einem ersten Faserwerkstoff (beispielsweise aus Polyethylen-Fasern) und einem zweiten Faserwerkstoff (beispielsweise aus Glasfasern) ausgebildet sind.

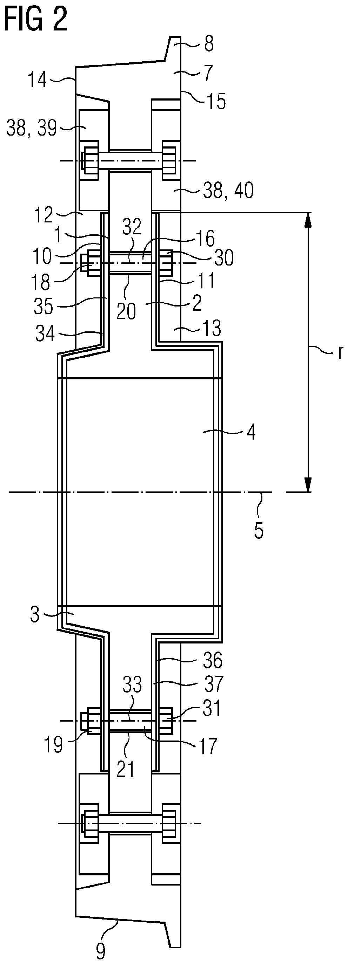

In Fig. 2 ist eine beispielhafte zweiten Ausführungsvariante eines erfindungsgemäßen Rads eines Fahrwerks eines Schienenfahrzeugs in geschnittener Darstellung dargestellt. Diese beispielhafte zweite Ausführungsvariante ähnelt jener beispielhaften ersten Ausführungsvariante eines erfindungsgemäßen Rads, die in Fig. 1 gezeigt ist. Es werden daher in Fig. 2 teilweise gleiche Bezugszeichen verwendet wie in Fig. 1.

Im Unterschied zu jener beispielhaften ersten Ausführungsvariante eines erfindungsgemäßen Rads, welche in Fig. 1 gezeigt ist, ist mit dem Rad gemäß Fig. 2 eine Radbremsscheibe 38 verbunden, die einen ersten Reibring 39 und einen zweiten Reibring 40 umfasst, welche mit einem Radkörper 1 des Rads verschraubt sind.
Weiterhin sind mit dem Radkörper 1 eine erste Schutzschale 10 und eine zweite Schutzschale 11 verschraubt. Im Unterschied zu Fig. 1 sind in Fig. 2 jedoch keine Schutzbeilagen dargestellt.
Die erste Schutzschale 10 ist im Bereich einer ersten Stirnseite 12 des Rads mit einem Radsteg 2 des Radkörpers 1 verbunden, die zweite Schutzschale 11 im Bereich einer zweiten Stirnseite 13 des Rads.

Im Unterschied zu der beispielhaften ersten Ausführungsvariante eines erfindungsgemäßen Rads gemäß Fig. 1, erstrecken sich die erste Schutzschale 10 und die zweite Schutzschale 11 nach Fig. 2 ausgehend von einer Mittenbohrung 4 einer Radnabe 3 des Radkörpers 1 nicht bis zu einem Radkranz 7 des Rads, sondern lediglich bis zu der Radbremsscheibe 38. Die erste Schutzschale 10 und die zweite Schutzschale 11 weisen demnach eine radiale Erstreckung von gleich einem Innenradius r der Radbremsscheibe 38 auf.
Die erste Schutzschale 10 erstreckt sich also bis zu dem ersten Reibring 39, die zweite Schutzschale 11 bis zu dem zweiten Reibring 40.
Erfindungsgemäß ist es jedoch auch vorstellbar, dass die erste Schutzschale 10 und die zweite Schutzschale 11 eine radiale Erstreckung von kleiner dem Innenradius r der Radbremsscheibe 38 aufweisen.

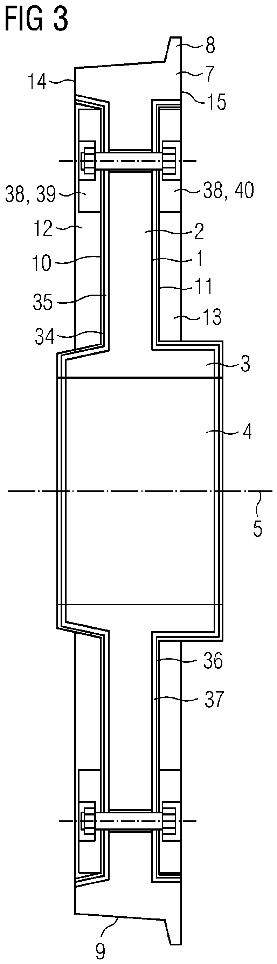

Fig. 3 offenbart einen Seitenriss einer beispielhaften dritten Ausführungsvariante eines erfindungsgemäßen Rads eines Fahrwerks eines Schienenfahrzeugs in geschnittener Darstellung.

Diese dritte Ausführungsvariante ähnelt jener beispielhaften zweiten Ausführungsvariante eines erfindungsgemäßen Rads, welche im Zusammenhang mit Fig. 2 beschrieben ist.
Es werden daher in Fig. 3 teilweise gleiche Bezugszeichen verwendet wie in Fig. 2.
Mit einem Radkörper 1 des Rads ist eine Radbremsscheibe 38 verschraubt, welche einen ersten Reibring 39 und einen zweiten Reibring 40 umfasst.
Mit dem Radkörper 1 sind weiterhin eine erste Schutzschale 10 und eine zweite Schutzschale 11 verbunden.
Im Unterschied zu jener beispielhaften zweiten Ausführungsvariante eines erfindungsgemäßen Rads, welche in Fig. 2 gezeigt ist, sind die erste Schutzschale 10 und die zweite Schutzschale 11 gemäß Fig. 3 zwischen dem Radkörper 1 und der Radbremsscheibe 38 eingespannt.
Es sind daher zur Verbindung der ersten Schutzschale 10 und der zweiten Schutzschale 11 mit dem Radkörper 1 keine eigenen Durchgangsschrauben, welche z.B. in Fig. 2 gezeigt sind, erforderlich, es sind vielmehr Befestigungsmittel der Radbremsscheibe 38 bzw. die Radbremsscheibe 38 selbst zum Verspannen der ersten Schutzschale 10 und der zweiten Schutzschale 11 eingesetzt.

Die erste Schutzschale 10 und die zweite Schutzschale 11 sind entlang eines Radstegs 2 des Radkörpers 1 verlaufend angeordnet und erstrecken sich ausgehend von einer Mittenbohrung 4 einer Radnabe 3 des Radkörpers 1 bis zu einer ersten Stirnfläche 14 und einer zweiten Stirnfläche 15 eines Radkranzes 7 des Radkörpers 1.
Die erste Schutzschale 10 erstreckt sich bis zu der ersten Stirnfläche 14, die zweite Schutzschale 11 bis zu der zweiten Stirnfläche 15.
Die erste Schutzschale 10 weist ein äußeres erstes Schalenteil 34 aus Metall und ein inneres zweites Schalenteil 35 aus Elastomer auf, wobei das zweite Schalenteil 35 dem Radkörper 1 zugewandt angeordnet ist.

Die zweite Schutzschale 11 weist ein äußeres drittes Schalenteil 36 aus Metall und ein inneres viertes Schalenteil 37 aus Elastomer auf, wobei das vierte Schalenteil 37 dem Radkörper 1 zugewandt angeordnet ist.

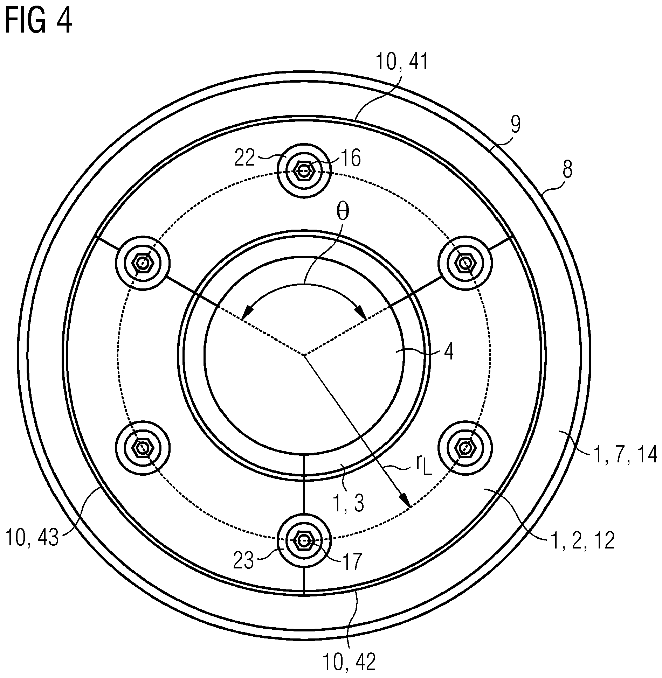

In Fig. 4 ist ein Grundriss einer beispielhaften vierten Ausführungsvariante eines erfindungsgemäßen Rads eines Fahrwerks eines Schienenfahrzeugs mit einer ersten Schutzschale 10 dargestellt.
Die erste Schutzschale 10 umfasst ein erstes Schutzschalenelement 41, ein zweites Schutzschalenelement 42 sowie ein drittes Schutzschalenelement 43, welche einzeln, d.h. voneinander getrennt, ausgebildet sind.
Das erste Schutzschalenelement 41, das zweite Schutzschalenelement 42 und das dritte Schutzschalenelement 43 sind aneinander angrenzend angeordnet und im Grundriss kreisringsektorförmig ausgebildet.
Erfindungsgemäß ist es jedoch auch vorstellbar, dass das erste Schutzschalenelement 41, das zweite Schutzschalenelement 42 und das dritte Schutzschalenelement 43 einander überlappend angeordnet sind.

Das erste Schutzschalenelement 41, das zweite Schutzschalenelement 42 und das dritte Schutzschalenelement 43 sind an einer ersten Stirnseite 12 eines Radkörpers 1 des Rads mittels einer ersten Durchgangsschraube 16, einer zweiten Durchgangsschraube 17 sowie weiteren Durchgangsschrauben, welche durch den Radkörper 1 hindurchgeführt sind und auf einem durch einen Lochkreisradius r_{L} definierten Umfang angeordnet sind, mit einem Radsteg 2 des Radkörpers 1 des Rads verschraubt.
Das erste Schutzschalenelement 41, das zweite Schutzschalenelement 42 und das dritte Schutzschalenelement 43 sind somit unabhängig voneinander tauschbar.

Das erste Schutzschalenelement 41, das zweite Schutzschalenelement 42 und das dritte Schutzschalenelement 43 erstrecken sich von einer Mittenbohrung 4 einer Radnabe 3 des Radkörpers 1 bis zu einer ersten Stirnfläche 14 eines Radkranzes 7 des Radkörpers 1 und sind an den Radkörper 1 anliegend, dessen Konturverlauf folgend, angeordnet. Erfindungsgemäß ist es jedoch auch denkbar, dass das erste Schutzschalenelement 41, das zweite Schutzschalenelement 42 und das dritte Schutzschalenelement 43 von dem Radkörper 1 beabstandet angeordnet sind (beispielsweise mittels Distanzstücken oder mittels Schrauben-Distanzscheiben zwischen dem ersten Schutzschalenelement 41, dem zweiten Schutzschalenelement 42 und dem dritten Schutzschalenelement 43 einerseits und dem Radkörper 1 andererseits).

Der Radkranz 7 weist einen Spurkranz 8 auf.
Auf dem Radkörper 1 ist umfangsseitig eine Lauffläche 9 vorgesehen.
Ein Mittelpunktswinkel θ des ersten Schutzschalenelements 41, des zweiten Schutzschalenelements 42 und des dritten Schutzschalenelements 43 beträgt 120°.
An der ersten Stirnseite 12 des Radkörpers 1 ist eine Anzahl an Schutzschalenelementen, welche als Quotient aus einer doppelten Kreiszahl 2π und dem Mittelpunktswinkel θ im Bogenmaß gebildet ist, angeordnet. Diese Anzahl beträgt für die in Fig. 4 dargestellte vierte Ausführungsvariante eines erfindungsgemäßen Rads drei.

Mit der ersten Durchgangsschraube 16 ist eine erste Schutzbeilage 22, mit der zweiten Durchgangsschraube 17 eine zweite Schutzbeilage 23, mit den weiteren Durchgangsschrauben sind weitere Schutzbeilagen verbunden.
Die erste Schutzbeilage 22, die zweite Schutzbeilage 23 und die weiteren Schutzbeilagen, welche konstruktiv gleich wie z.B. in jener beispielhaften ersten Ausführungsvariante eines erfindungsgemäßen Rads, die im Zusammenhang mit Fig. 1 beschrieben ist, ausgeführt sind, sind an das erste Schutzschalenelement 41, das zweite Schutzschalenelement 42 und das dritte Schutzschalenelement 43 anliegend angeordnet.

Das erste Schutzschalenelement 41, das zweite Schutzschalenelement 42 und das dritte Schutzschalenelement 43 weisen jeweils ein äußeres Schalenteil aus Verbundblech sowie, dem Radkörper 1 zugewandt, ein inneres Schalenteil aus Elastomer auf.

Fig. 5 zeigt einen Seitenriss einer beispielhaften Ausführungsvariante eines Radsatzes in geschnittener Darstellung mit einem erfindungsgemäßen ersten Rad 44, einem erfindungsgemäßen zweiten Rad 45 und einer Radsatzwelle 6 mit einem Radsatzwellenschutzmantel 46.
Das erste Rad 44 und das zweite Rad 45 weisen eine gemeinsame Radachse 5 auf und sind über Presssitze mit der Radsatzwelle 6 verbunden.
Das erste Rad 44 und das zweite Rad 45 sind ähnlich jener beispielhaften ersten Ausführungsvariante eines erfindungsgemäßen Rads, welche im Zusammenhang mit Fig. 1 beschrieben ist, ausgeführt und weisen entsprechende Schutzschalen auf.
Der Radsatzwellenschutzmantel 46 ist um die Radsatzwelle 6 geschlungen und umfasst eine biegsame Elastomermatte, welche die Radsatzwelle 6 kontaktiert, sowie ein biegsames Blechgehäuse, welches die Elastomermatte ummantelt.
Der Radsatzwellenschutzmantel 46 ist mittels in Fig. 5 nicht sichtbarer Schlauchschellen mit der Radsatzwelle 6 verbunden. An Innenseiten des ersten Rads 44 und des zweiten Rads 45 angeordnete Schutzschalen überlappen den Radsatzwellenschutzmantel 46 im Bereich von dessen Enden.

### Liste der Bezeichnungen

- 1: Radkörper
- 2: Radsteg
- 3: Radnabe
- 4: Mittenbohrung
- 5: Radachse
- 6: Radsatzwelle
- 7: Radkranz
- 8: Spurkranz
- 9: Lauffläche
- 10: Erste Schutzschale
- 11: Zweite Schutzschale
- 12: Erste Stirnseite
- 13: Zweite Stirnseite
- 14: Erste Stirnfläche
- 15: Zweite Stirnfläche
- 16: Erste Durchgangsschraube
- 17: Zweite Durchgangsschraube
- 18: Erste Schraubenmutter
- 19: Zweite Schraubenmutter
- 20: Erste Bohrung
- 21: Zweite Bohrung
- 22: Erste Schutzbeilage
- 23: Zweite Schutzbeilage
- 24: Dritte Schutzbeilage
- 25: Vierte Schutzbeilage
- 26: Erste Ausnehmung
- 27: Zweite Ausnehmung
- 28: Dritte Ausnehmung
- 29: Vierte Ausnehmung
- 30: Erster Schraubenkopf
- 31: Zweiter Schraubenkopf
- 32: Erste Längsachse
- 33: Zweite Längsachse
- 34: Erstes Schalenteil
- 35: Zweites Schalenteil
- 36: Drittes Schalenteil
- 37: Viertes Schalenteil
- 38: Radbremsscheibe
- 39: Erster Reibring
- 40: Zweiter Reibring
- 41: Erstes Schutzschalenelement
- 42: Zweites Schutzschalenelement
- 43: Drittes Schutzschalenelement
- 44: Erstes Rad
- 45: Zweites Rad
- 46: Radsatzwellenschutzmantel

- r: Innenradius
- r_{L}: Lochkreisradius
- θ: Mittelpunktswinkel

## Patentansprüche

1. Rad für Fahrzeuge, insbesondere für Fahrwerke von Schienenfahrzeugen, mit einem Radkörper und einer Lauffläche, **dadurch gekennzeichnet, dass** zumindest eine erste Schutzschale (10) mit dem Radkörper (1) verbunden ist, wobei die zumindest erste Schutzschale (10) mittels Schrauben, welche in Bohrungen des Radkörpers (1) und der zumindest ersten Schutzschale (10) gelagert sind, mit dem Radkörper (1) verbunden ist, wobei mit den Schrauben Schutzbeilagen verbunden sind, welche Ausnehmungen aufweisen, in welchen Schraubenköpfe der Schrauben vorgesehen sind.

2. Rad nach Anspruch 1, **dadurch gekennzeichnet, dass** die zumindest erste Schutzschale (10) lösbar mit dem Radkörper (1) verbunden ist.

3. Rad nach Anspruch 1 oder 2, **dadurch gekennzeichnet, dass** die zumindest erste Schutzschale (10) entlang eines Radstegs (2) verlaufend angeordnet ist.

4. Rad nach Anspruch 3, **dadurch gekennzeichnet, dass** die zumindest erste Schutzschale (10) sich bis zu einer Mittenbohrung (4) einer Radnabe (3) erstreckend angeordnet ist.

5. Rad nach Anspruch 3 oder 4, **dadurch gekennzeichnet, dass** die zumindest erste Schutzschale (10) sich bis zu einer ersten Stirnfläche (14) eines Radkranzes (7) erstreckend angeordnet ist.

6. Rad nach einem der Ansprüche 1 bis 4, **dadurch gekennzeichnet, dass** mit dem Radkörper (1) eine Radbremsscheibe (38) verbunden ist, wobei die zumindest erste Schutzschale (10) eine radiale Erstreckung von kleiner oder gleich einem Innenradius (r) der Radbremsscheibe (38) aufweist.

7. Rad nach einem der Ansprüche 1 bis 5, **dadurch gekennzeichnet, dass** mit dem Radkörper (1) eine Radbremsscheibe (38) verbunden ist, wobei die zumindest erste Schutzschale (10) zwischen dem Radkörper (1) und einem ersten Reibring (39) der Radbremsscheibe (38) eingespannt ist.

8. Rad nach einem der Ansprüche 1 bis 7, **dadurch gekennzeichnet, dass** die zumindest erste Schutzschale (10) an den Radkörper (1) anliegend angeordnet ist.

9. Rad nach einem der Ansprüche 1 bis 7, **dadurch gekennzeichnet, dass** die zumindest erste Schutzschale (10) von dem Radkörper (1) beabstandet angeordnet ist.

10. Rad nach einem der Ansprüche 1 bis 9, **dadurch gekennzeichnet, dass** die zumindest erste Schutzschale (10) einem Konturverlauf des Radkörpers (1) folgend ausgebildet ist.

11. Rad nach einem der Ansprüche 1 bis 10, **dadurch gekennzeichnet, dass** die zumindest erste Schutzschale (10) im Grundriss kreisringförmig ausgebildet ist.

12. Rad nach einem der Ansprüche 1 bis 11, **dadurch gekennzeichnet, dass** die zumindest erste Schutzschale (10) aus einzelnen Schutzschalenelementen ausgebildet ist.

13. Rad nach Anspruch 12, **dadurch gekennzeichnet, dass** die einzelnen Schutzschalenelemente aneinander angrenzend angeordnet sind.

14. Rad nach Anspruch 12, **dadurch gekennzeichnet, dass** die einzelnen Schutzschalenelemente einander überlappend angeordnet sind.

15. Rad nach einem der Ansprüche 1 bis 14, **dadurch gekennzeichnet, dass** die zumindest erste Schutzschale (10) ein äußeres erstes Schalenteil (34) aus Metall und ein inneres zweites Schalenteil (35) aus Elastomer aufweist, wobei das zweite Schalenteil (35) dem Radkörper (1) zugewandt angeordnet ist.

16. Rad nach einem der Ansprüche 1 bis 14, **dadurch gekennzeichnet, dass** die zumindest erste Schutzschale (10) aus faserverstärktem Kunststoff mit einer Matrix aus organischem Material sowie einem ersten Faserwerkstoff und einem zweiten Faserwerkstoff ausgebildet ist.

17. Radsatz eines Fahrzeugs mit zwei Rädern nach einem der Ansprüche 1 bis 16, **dadurch gekennzeichnet, dass** eine Radsatzwelle (6) einen Radsatzwellenschutzmantel (46) aufweist.

18. Radsatz nach Anspruch 17, **dadurch gekennzeichnet, dass** Schutzschalen der Räder den Radsatzwellenschutzmantel (46) überlappend angeordnet sind.
